**Europäisches Patentamt**

**European Patent Office**

**Office européen des brevets**

(19)

(11) Veröffentlichungsnummer: **0 150 432**
**B1**

(12) # EUROPÄISCHE PATENTSCHRIFT

(45) Veröffentlichungstag der Patentschrift:
09.03.88

(51) Int. Cl.⁴: **C 01 B 15/12**

(21) Anmeldenummer: **84115682.1**

(22) Anmeldetag: **18.12.84**

(54) **Kaliumperborat-Hydrat und Verfahren zu seiner Herstellung.**

(30) Priorität: **30.12.83 DE 3347595**

(43) Veröffentlichungstag der Anmeldung:
**07.08.85 Patentblatt 85/32**

(45) Bekanntmachung des Hinweises auf die Patenterteilung:
**09.03.88 Patentblatt 88/10**

(84) Benannte Vertragsstaaten:
**AT BE CH DE FR GB IT LI NL SE**

(56) Entgegenhaltungen:
DE - C - 1 002 294
DE - C - 1 011 858

**GMELINS HANDBUCH DER ANORGANISCHEN CHEMIE
"Kalium", Band 22 1937, VERLAG CHEMIE, Weinheim
Seiten 817-818
CHEMIKER-ZEITUNG, Jahrgang 99, Nr. 3, 1975,
Heidelberg; F. BEER et al. "Wasserstoffperoxid und
Peroxoverbindungen in der anorganischen Chemie",
Seiten 120-125**

**Die Akte enthält technische Angaben, die nach dem
Eingang der Anmeldung eingereicht wurden und die
nicht in dieser Patentschrift enthalten sind.**

(73) Patentinhaber: **Peroxid-Chemie GmbH,
Dr.-Gustav-Adolph-Strasse 3, D-8023 Höllriegelskreuth
bei München (DE)**

(72) Erfinder: **Dötsch, Werner, Dr. Dipl.-Chem., Kreuzgasse 3,
D-5462 Bad Hönningen (DE)**
Erfinder: **Siegel, Rudolf, Kurt-Schumacher-Strasse 8,
D-5450 Neuwied 13 (DE)**

(74) Vertreter: **Lauer, Dieter, Dr., c/o Kali-Chemie AG
Postfach 220 Hans-Böckler-Allee 20,
D-3000 Hannover 1 (DE)**

EP 0 150 432 B1

## Beschreibung

Die vorliegende Erfindung betrifft Kaliumperborat-Hydrat und ein Verfahren zu seiner Herstellung.

Im Handel befindliches Kaliumperborat entspricht der Brutto-Formel $KBO_3 \cdot H_2O_2$. Dieses pulverförmige Produkt ist nur bis maximal 80 °C stabil; darüber zersetzt es sich, wobei es sogar zu explosionsartiger Zersetzung kommen kann.

Aufgabe der Erfindung ist es, ein thermisch stabiles Perborat und ein Verfahren zu seiner Herstellung zur Verfügung zu stellen.

Diese Aufgabe wird gelöst durch das in den Ansprüchen angegebene Produkt und Verfahren. Gegenstand der Erfindung ist ein Kaliumperborat-Hydrat (KPB) der Brutto-Formel $KBO_3 \cdot n\ H_2O$, wobei n für einen Wert bis 1 steht. Bevorzugte Werte für n sind 1 und Werte im Bereich von 0,05 bis 1, vorzugsweise 0,20 bis 1, insbesondere 0,50 bis 0,95. Diese Produkte zeichnen sich durch Aktivsauerstoffgehalte von 13,8% (n=1) und beispielhafte Werte von 14,0%, 15,0% und 15,7% für weitere Hydratstufen mit n < 1 aus.

Eine differentialthermoanalytische Untersuchung des kristallinen Produktes zeigt einen endothermen Peak (Wasserabspaltung) bei 80 °C und einen exothermen Doppelpeak (Zersetzung) bei etwa 250 °C. Das erfindungsgemässe KPB besitzt somit eine ausgezeichnete thermische Stabilität, wobei besonders hervorzuheben ist, dass diese Stabilität ohne Zusatz besonderer Stabilisatoren erreicht wird.

Die Erfindung umfasst auch ein erfinderisches Verfahren zur Herstellung von Kaliumperborat-Monohydrat (KPB1). Dieses geht aus von der für Kaliumperborate bekannten Umsetzung von Wasserstoffperoxid mit Kaliummetaborat in Gegenwart von Wasser und ist dadurch gekennzeichnet, dass man zur Herstellung von Kaliumperborat-Monohydrat

a) in einer Reaktionszone ein Gemisch aus Wasserstoffperoxid und Kaliummetaborat bildet, wobei ein die stöchiometrisch notwendige Menge überschreitender Gehalt an Kalium-Ionen eingestellt wird.

b) in der Reaktionszone gebildetes Kaliumperborat-Monohydrat abzieht, von der Mutterlauge abtrennt und in an sich bekannter Weise trocknet.

Unter Reaktionszone wird ein räumlicher Bereich verstanden, in dem die Reaktionspartner miteinander in Kontakt gebracht werden. Sie kann z.B. als Reaktor in Form eines Behälters oder Rohres ausgebildet sein.

In einer bevorzugten Variante des Verfahrens stellt man in der Reaktionszone eine Konzentration an Wasserstoffperoxid – gemessen durch manganometrische Titration gefilterter Mutterlauge und berechnet als 100%iges $H_2O_2$ – von 70 bis 150 g/l, vorzugsweise 80 bis 110 g/l ein.

In einer weiteren Variante stellt man in der Reaktionszone eine Konzentration an $B_2O_3$ (gemessen in gefilterter Mutterlauge) von 70 bis 180 g/l, vorzugsweise 80 bis 120 g/l ein.

Wasserstoffperoxid und Metaborat werden in etwa stöchiometrischen Mengen eingesetzt. Eine bevorzugte Variante sieht dabei vor, einen leichten Überschuss an Metaborat einzusetzen, der – gemessen in der Mutterlauge – bis zu 35 Mol-%, vorzugsweise bis zu 25 Mol-% betragen kann.

Nach der Stöchiometrie sollten Wasserstoffperoxid und Kalium-Ionen im Molverhältnis 1:1 eingesetzt werden. Das erfindungsgemässe Verfahren sieht aber vor, eine dieses Verhältnis überschreitende Menge an Kalium-Ionen einzusetzen. Der Überschuss an Kalium-Ionen in der Reaktionszone wird vorteilhafter Weise auf 30 bis 400 Mol-%, vorzugsweise auf 50 bis 200 Mol-%, bezogen auf die stöchiometrisch notwendige Menge an Kalium-Ionen eingestellt. Es hat sich dabei als besonders vorteilhaft herausgestellt, diesen Überschuss zumindest teilweise nicht in Form von Kaliummetaborat einzusetzen, sondern in Form eines anderen, im Reaktionsgemisch löslichen Kaliumsalzes. Dieses kann sowohl separat als auch mit der einzudosierenden Metaborat- und/oder Wasserstoffperoxid-Lösung zugefügt werden. Bevorzugte Kaliumsalze sind Kaliumsulfat und/oder Kaliumchlorid.

Obwohl insbesondere zur Erreichung der ausgezeichneten Trockenstabilität der Zusatz besonderer Aktivsauerstoffstabilisatoren nicht erforderlich ist, können solche bekannten Stabilisatoren wie Silikate, Phosphate, Phosphonsäuren, organische Komplexbildner usw. zugesetzt werden.

Die Temperatur in der Reaktionszone bewegt sich im üblichen Bereich für die Herstellung von Perboraten und beträgt typischerweise 0 bis 30 °C, vorzugsweise 0 bis 20 °C.

Die Reaktion wird bevorzugt unter Rühren bzw. Vermischen in an sich bekannter Weise durchgeführt. Sie kann dabei diskontinuierlich oder kontinuierlich geführt werden. So sieht eine besondere Variante die kontinuierliche Verfahrensführung vor, die darin besteht, dass man in die Reaktionszone kontinuierlich und entsprechend der Entnahme gemäss Stufe b) eindosiert: Wasserstoffperoxid, Kaliummetaborat-Lösung, gegebenenfalls lösliches Kaliumsalz, sowie mindestens einen Teil der in Stufe b) anfallenden Mutterlauge.

Es ist für den Fachmann selbstverständlich, dass man zu Beginn der Umsetzung KPB1-Keime aus einem vorherigen Ansatz in die Reaktionszone geben kann, um gegebenenfalls das Einsetzen der Fällung zu beschleunigen.

Die Verweilzeit in der Reaktionszone kann je nach Bedarf variiert werden. Zur Ausbildung eines groben, abriebfesten Kristallisates sind mittlere Verweilzeiten von 0,5 bis 4 Stunden, vorzugsweise 1 bis 3 Stunden vorteilhaft. Dabei wird Kristallisat mit sehr engem Kornspektrum erhalten. Bei einem typischen KPB1 liegen 80 Gew.-%, vorzugsweise 90 Gew.-% innerhalb einer Korngrösse von 0,053 bis 0,42 mm. Diese Werte gelten auch für weiter entwässertes KPB.

Die Aufbereitung des Kristallisates erfolgt in an sich bekannter Weise durch Trennverfahren wie z.B. Filtration oder Zentrifugieren und anschliessendes Trocknen des feuchten Kristallisats. Dafür können bekannte Trockner, wie z.B. Wirbelbett-trockner zum Einsatz gelangen. Wesentlich ist dabei, dass die Guttemperatur unter der eine Dehydratisierung des KPB1 bewirkenden Temperatur bleibt, sofern man das Monohydrat herzustellen beabsichtigt. Zur Herstellung von Hydratformen $KBO_3 \cdot nH_2O$, bei denen n kleiner als 1 ist, wird KPB1 bei Guttemperaturen behandelt, die oberhalb der eine Dehydratisierung bewirkenden Temperatur liegen.

Das erfindungsgemässe Verfahren ist neu und erfinderisch. So ist es insbesondere im Vergleich zur Herstellung von Natriumperborat-Monohydrat überraschend, dass für das Kaliumsalz das Monohydrat direkt durch Kristallisation erhalten werden kann und nicht erst wie beim Natriumsalz ein Tetrahydrat kristallisiert, das in einer anschliessenden, zusätzlichen Stufe zum Monohydrat dehydratisiert werden muss.

Die folgenden Beispiele sollen die Erfindung näher beschreiben, ohne aber ihren Umfang zu begrenzen. %-Angaben bedeuten Gew.-%.

Beispiel 1

Herstellung einer Vorlage.

Zu 1,5 l Kaliummetaboratlösung (253,4 g/l KOH, 216,6 g/l $B_2O_3$. 151 g/l KCl) werden unter Rühren 280 ml $H_2O_2$ (54 Gew.-%, dem 250 g KCl/l zugesetzt waren) hinzugegeben und diese Vorlage auf 2°C abgekühlt.

Beispiel 2

Fällung von Kaliumperborat-Monohydrat und Aufarbeitung

In die gemäss Beispiel 1 hergestellte Vorlage wird nach einer Rührzeit von 45 Min. unter weiterem Rühren bei einer Arbeitstemperatur von 2–4 °C kontinuierlich Kaliummetaboratlösung (253,4 g/l KOH, 216,6 g/l $B_2O_3$, 151 g/l KCl) und Wasserstoffperoxidlösung (54 Gew.-%, dem 250 g KCl/l zugesetzt waren) zugesetzt. Gleichzeitig wird kontinuierlich Reaktionsgemisch entsprechend dem Zulauf abgezogen. Zulauf und Abnahme werden dabei derart aufeinander abgestimmt, dass sich eine $H_2O_2$-Konzentration von 96 g/l und eine $B_2O_3$-Konzentration von 113 g/l in der filtrierten Mutterlauge einstellt.

Das anfallende Kristallisat wird von der Mutterlauge durch Filtration getrennt und im Wirbelbetttrockner bei einer Ablufttemperatur von 30 °C getrocknet.

Die anfallende Mutterlauge wird zur Herstellung von Kaliummetaboratlösung wiederverwendet.

Das hergestellte Kaliumperborat zeigt folgende Analyse:

| | |
|---|---|
| Aktivsauerstoffgehalt: | 13,7% |
| Schuttgewicht: | 0,94 kg/l |

Kornanalyse

| gr. | 0,84 | mm: | 0,0% |
|---|---|---|---|
| 0,84 | 0,42 | mm: | 5,8% |
| 0,42 | – 0,149 | mm: | 83,2% |
| 0,149 | – 0,053 | mm: | 11,0% |
| kl. | 0,053 | mm: | 0,0% |

Beispiel 3

Das in Beispiel 2 hergestellte KPB1 wurde in einem Wirbelbett-Trockner bei einer Ablufttemperatur von 40 °C weiterentwässert. Es konnte ein KPB mit einem Aktivsauerstoffgehalt von 15,0% hergestellt werden.

Beispiel 4

Das in Beispiel 2 hergestellte KPB1 wurde in einem Wirbelbett-Trockner bei einer Ablufttemperatur von 60 °C weiterentwässert. Es konnte ein KPB mit einem Aktivsauerstoffgehalt von 15,7% hergestellt werden.

**Patentansprüche**

1. Verfahren zur Herstellung von Kaliumperborat durch Umsetzung von Wasserstoffperoxid mit Kaliummetaborat in Gegenwart von Wasser, dadurch gekennzeichnet, dass man zur Herstellung von Kaliumperborat-Monohydrat

a) in einer Reaktionszone ein Gemisch aus Wasserstoffperoxyd und Kaliummetaborat bildet, wobei ein die stöhiometrisch notwendige Menge überschreitender Gehalt an Kalium-Ionen eingestellt wird,

b) in der Reaktionszone gebildetes Kaliumperborat-Monohydrat abzieht, von der Mutterlauge abtrennt und in an sich bekannter Weise trocknet.

2. Verfahren nach Anspruch 1, dadurch gekennzeichnet, dass man in der Reaktionszone eine Wasserstoffperoxid-Konzentration von 70 bis 150 g/l, vorzugsweise 80 bis 110 g/l einstellt.

3. Verfahren nach einem der vorhergehenden Ansprüche, dadurch gekennzeichnet, dass man einen Überschuss an Kalium-Ionen einstellt, der 30 bis 400 mol%, vorzugsweise 50 bis 200 mol% beträgt.

4. Verfahren nach einem der vorhergehenden Ansprüche, dadurch gekennzeichnet, dass man in der Reaktionszone eine Konzentration an $B_2O_3$ von 70 bis 180 g/l, vorzugsweise 80 bis 120 g/l einstellt.

5. Verfahren nach einem der vorhergehenden Ansprüche, dadurch gekennzeichnet, dass man den stöchiometrischen Überschuss zumindest teilweise durch Zugabe eines im Reaktionsgemisch löslichen Kaliumsalzes einstellt.

6. Verfahren nach Anspruch 5, dadurch gekennzeichnet, dass man als Kaliumsalz Kaliumsulfat und/oder Kaliumchlorid einsetzt.

7. Verfahren nach einem der vorhergehenden Ansprüche, dadurch gekennzeichnet, dass man im Reaktionsgemisch eine Temperatur von 0 bis 30 °C, vorzugsweise 0 bis 20 °C einstellt.

8. Verfahren nach einem der vorhergehenden Ansprüche, dadurch gekennzeichnet, dass man Reaktionsgemisch aus der Reaktionszone nach einer Verweilzeit von 0,5 bis zu 4 Stunden vorzugsweise 1 bis 3 Stunden abzieht.

9. Kontinuierliches Verfahren nach einem der vorhergehenden Ansprüche, dadurch gekennzeichnet, dass man in die Reaktionszone kontinuierlich und entsprechend der Entnahme gemäss Stufe b) eindosiert Wasserstoffperoxid, Kaliummetaborat-Lösung, gegebenenfalls lösliches Kaliumsalz, sowie mindestens einen Teil der in Stufe b) anfallenden Mutterlauge.

10. Kaliumperborat-Hydrat gekennzeichnet durch einen mittels Differentialthermoanalyse ermittelbaren endothermen Peak bei 80 °C und einen exothermen Doppelpeak bei etwa 250 °C.

11. Kaliumperborat-Monohydrat gemäss Anspruch 10, herstellbar gemäss einem Verfahren der in den Ansprüchen 1 bis 9 angegebenen Art.

12. Verwendung des durch die Ansprüche 10 oder 11 charakterisierten Kaliumperborat-Hydrats zur Herstellung eines Kaliumperborat-Hydrats der Formel $KBO_3 \times n\,H_2O$, wobei $n < 1$ ist.

## Revendications

1. Procédé de préparation du perborate de potassium per réaction de peroxyde d'hydrogène sur du métaborate de potassium en présence d'eau, caractérisé en ce que, pour préparer le perborate de potassium monohydraté,

a) on forme dans une zone de réaction un mélange de peroxyde d'hydrogène et de métaborate de potassium, en ajustant la teneur en ions potassium à une valeur supérieure à la quantité nécessaire d'un point de vue stoechiométrique,

b) on soutire le perborate de potassium monohydraté formé dans la zone de réaction, on le sépare de la liqueur-mère et on le sèche d'une manière connue en soi.

2. Procédé selon la revendication 1, caractérisé en ce qu'on ajuste dans la zone de réaction la concentration du peroxyde d'hydrogène à une valeur de 70 à 150 g/l, de préférence de 80 à 110 g/l.

3. Procédé selon l'une des revendications précédentes, caractérisé en ce qu'on ajuste la concentration des ions potassium à un excès égal à 30 à 400% en moles, de préférence 50 à 200% en moles.

4. Procédé selon l'une des revendications précédentes, caractérisé en ce qu'on ajuste dans la zone de réaction la concentration de $B_2O_3$ à une valeur de 70 à 180 g/l, de préférence de 80 à 120 g/l.

5. Procédé selon l'une des revendications précédentes, caractérisé en ce qu'on ajuste l'excès stoechiométrique, du moins partiellement, par addition d'un sel de potassium soluble dans le mélange réactionnel.

6. Procédé selon la revendication 5, caractérisé en ce qu'on utilise comme sel de potassium le sulfate de potassium et/ou le chlorure de potassium.

7. Procédé selon l'une des revendications précédentes, caractérisé en ce qu'on ajuste dans le mélange réactionnel la température à une valeur de 0 à 30 °C, de préférence de 0 à 20 °C.

8. Procédé selon l'une des revendications précédentes, caractérisé en ce qu'on soutire le mélange réactionnel de la zone de réaction après un temps de séjour de 0,5 à 4 heures, de préférence de 1 à 3 heures.

9. Procédé continu selon l'une des revendications précédentes, caractérisé en ce qu'on introduit dans la zone de réaction, en continu et d'une manière correspondant au soutirage selon l'étape b), du peroxyde d'hydrogène, une solution de métaborate de potassium, éventuellement un sel de potassium soluble, ainsi qu'au moins une partie de la liqueur-mère obtenue dans l'étape b).

10. Perborate de potassium hydraté, caractérisé en ce qu'il présente un pic endothermique à 80 °C, et un pic double exothermique à environ 250 °C, déterminables par une analyse thermique différentielle.

11. Perborate de potassium monohydraté selon la revendication 10, pouvant être préparé par l'un des procédés selon les revendications 1 à 9.

12. Utilisation du perborate de potassium hydraté caractérisé par les revendications 10 ou 11, pour la préparation d'un perborate de potassium hydraté ayant la formule $KBO_3 \times nH_2O$, où $n < 1$.

## Claims

1. A process for the preparation of potassium perborate by reaction of hydrogen peroxide with potassium metaborate in the presence of water, characterised in that, for the preparation of potassium perborate monohydrate,

a) mixture of hydrogen peroxide and potassium metaborate is formed in an reaction zone, the potassium ion content being adjusted such that it exceeds the stoichiometrically required quantity,

b) potassium perborate monohydrate formed in the reaction zone is drawn off, separated from the mother liquor and dried in an inherently known way.

2. A process according to Claim 1, characterised in that the hydrogen peroxide concentration in the reaction zone is adjusted to 70 to 150 g/l, preferably 80 to 110 g/l.

3. A process according to one of the previous claims, characterised in that an excess of potassium ions is brought about, which is 30 to 400 mole %, preferably 50 to 200 mole %.

4. A process according to one of the previous claims, characterised in that the $B_2O_3$ concentration in the reaction zone is adjusted to 70 to 180 g/l, preferably 80 to 120 g/l.

5. A process according to one of the previous claims, characterised in that the stoichiometric excess is brought about at least partially by adding a potassium salt that is soluble in the reaction mixture.

6. A process according to Claim 5, characterised in that potassium sulphate and/or potassium chloride is used as the potassium salt.

7. A process according to one of the previous claims, characterised in that the temperature in the reaction mixture is adjusted to 0 to 30 °C, preferably 0 to 20 °C.

8. A process according to one of the previous claims, characterised in that reaction mixture is drawn off from the reaction zone after a residence time of 0.5 to 4 hours, preferably 1 to 3 hours.

9. A continuous process according to one of the previous claims, characterised in that hydrogen peroxide, potassium metaborate solution, possibly soluble potassium salt and at least part of the mother liquor obtained in stage b is metered into the reaction zone continuously and in accordance with the withdrawal according to stage b.

10. Potassium perborate hydrate, characterised by an endothermic peak, which can be determined by differential thermal analysis, at 80 °C and an exothermic double peak at about 250 °C.

11. Potassium perborate monohydrate according to claim 10, which can be prepared according to a process of the kind stated in claims 1 to 9.

12. Use of the potassium perborate hydrate characterised by claims 10 or 11 for the preparation of a potassium perborate hydrate having the formula $KBO_3 \times n\, H_2O$ where $n < 1$